# NEUE EUROPÄISCHE PATENTSCHRIFT

(11) **EP 0 414 095 B2**
(45) Veröffentlichungstag und Bekanntmachung des Hinweises auf die Entscheidung über den Einspruch: **06.08.1997**
(45) Hinweis auf die Patenterteilung: 06.07.1994
(21) Anmeldenummer: 90115537.4
(22) Anmeldetag: 14.08.1990
(51) Int. Cl.: B01D 53/85, B01D 53/04

(54) **Abgasreinigungsverfahren und Vorrichtung zur Durchführung des Verfahrens**
Exhaust gas purification process and apparatus for carrying out the process
Procédé pour nettoyage de gaz d'échappement et dispositif pour réaliser le procédé

(30) Priorität: 22.08.1989 CH 3039/89
(43) Veröffentlichungstag der Anmeldung: 27.02.1991
(73) Patentinhaber: OTTO LUFT- und KLIMATECHNIK GmbH & Co. KG, 57319 Bad Berleburg (DE)
(72) Erfinder: Volker, Fattinger, CH-4144 Arlesheim (CH)
(74) Vertreter: Katscher, Helmut, Dipl.-Ing.

(56) Entgegenhaltungen:
- EP-A- 0 274 986
- EP-B- 014 872
- DE-A- 3 803 613
- NL-A- 8 403 573

## Beschreibung

Die Erfindung betrifft ein Verfahren zur Reinigung von mit Schadstoffen belastetem Abgas, wobei ein Teil oder die Gesamtmenge der abgeschiedenen Schadstoffe durch biologische Oxidation entsorgt wird und sowohl ein Biofilter als auch ein Adsorptionsfilter verwendet werden, sowie eine Vorrichtung zur Durchführung des Verfahrens. Unter "belastetem Abgas" ist in diesem Zusammenfang insbesondere auch "belastete Abluft" zu verstehen.

Es ist bekannt, Schadstoffe aus Abluft oder anderem Abgas durch Mikroorganismen - zumeist Bakterien, aber auch Schimmelpilze oder Hefen - biologisch zu CO₂ und H₂O zu oxidieren. Die Mikroorganismen können z.B. durch Zumischen von Belebtschlamm einer Abwasserkläranlage in die gasdurchlässige Filterschicht gebracht werden. Als Trägermaterial werden beispielsweise Tod, Reisig, Kompost, Heidekraut. aber auch Aktivkohle. Polystyrol-Hartschaum, Gasbeton oder anderes körniges oder faseriges Material verwendet. Es ist bekannt, vor oder nach einem Biofilter oder auch zwischen zwei oder mehreren Biofiltern einen Puffer in Form eines Adsorptions- oder Absorptionsmittels zu schalten. Als Adsorptionsmittel dient z.B. Aktivkohle oder ein Molekularsieb, als Absorptionsmittel dienen hochsiedende organische Flüssigkeiten.

Diese Püffer-Vorrichtungen sind - bezogen auf eine Durchschnittskonzentration von Schadgasen - weitgehend gesättigt. Bei Schwankungen der Schadstoffkonzentration sind die Puffervorrichtungen in der Lage, Schadstoffe aus dem Gasstrom aufzunehmen oder an denselben abzugeben. Hieraus resultiert eine bessere Ausnutzung der Biofilter und die Fähigkeit des Systems, Stösse hoher Schadstoffmengen aufzufangen. Bei länger anhaltenden Schadstoffkonzentrationen, welche über der Abbauleistung der Biofilter liegen, oder bei schlecht oder nicht biologisch abbaubaren Schadstoffen (z.B. bei Fluorkohlenwasserstoffen) kann mit solchen Systemen die behördlich geforderte Gasreinheit nicht erreicht werden.

Bei einem bekannten Verfahren (EP-A-0274986) erfolgt keine thermische Desorption. Bei verhältnismäßig hohen, länger anhaltenden Schadstoffkonzentrationen kann die geforderte Gasreinheit damit nicht oder nicht immer zuverlässig erreicht werden.

Aus NL-A-84 03 573 ist ein Verfahren zur Reinigung von mit Schadstoffen belasteten Abgas bekannt, wobei sowohl ein Biofilter als auch Adsorptionsfilter verwendet wird.

In Zeiten geringen Schadstoffanfalls wird der Adsorber desorbiert und die Schadstoffe durch den Biofilter geleitet. Die desorbierten Schadstoffe werden nur ein einziges Mal durch den Biofilter geführt. Daher muß der Biofilter verhältnismäßig groß ausgeführt werden, um eine ausreichende Schadstoffkonzentration im Reingas zu erreichen.

Aufgabe der Erfindung ist es daher, ein Verfahren der eingangs genannten Gattung so auszubilden, daß bei länger anhaltenden Schadstoffkonzentrationen, die über der Abbauleistung des Biofilters liegen, die geforderten Gasreinheiten erzielt und in Perioden, in denen kein Abgas gereinigt werden muß, ein verbessertes Abbauverhalten mit geringem Aufwand erzielt wird.

Diese Aufgabe wird erfindungsgemäß dadurch gelöst, daß
- im Biofilter mit feuchten Feststoffschichten und Temperatur unter 45°C gearbeitet wird,
- in mindestens einem vor oder nach dem Biofilter vom Abgas durchströmten Adsorptionsfilter bei einer relativen Gasfeuchte unter 90 % Schadgase adsorbiert werden, und das Adsorptionsfilter durch periodisches Erwärmen auf Temperaturen über 45° C weitgehend frei von Mikroorganismen gehalten wird,
- mindestens ein Teil der beim Erwärmen desorbierten Schadstoffe einem biologischen Abbau im Biofilter unterworfen wird,
- in Perioden, in denen kein Abgas gereinigt werden muss, der Gasaustritt des Filtersystems mit dem Gaseintritt verbunden wird und ein Luftkreislauf aufrechterhalten wird.

Bei dem erfindungsgemäßen Verfahren werden Adsorptionsfilter nicht als Puffer genutzt, sondern regeneriert, bevor das aus dem Gesamtsystem austretende, gereinigte Abgas eine zulässige Schadstoffkonzentration übersteigt. Das mit Schadstoffen belastete Abgas wird durch mindestens ein Biofilter und ein Adsorptionsfilter geleitet.

Bei der Regeneration des Adsorbers in Zeiten außerhalb der Produktion ist prinzipiell eine beliebig hohe Konzentration in der Kreislaufluft einstellbar; durch möglichst hohe Konzentration wird eine Steigerung der Abbauleistung des Biofilters erreicht; dadurch kann der Biofilter kleiner gebaut werden. Die Konzentration am Biofiltereintritt kann beliebig hoch gewählt werden, da wegen der Kreislaufführung der Regenerationsluft keine zusätzliche Emission von Schadstoffen erfolgt. Zur Regelung der Anlage ist keine Überwachung der Schadstoffkonzentration erforderlich.

Das Nachschalten eines Biofilters hinter einem Adsorptionsfilter erlaubt höhere Beladungen des Adsorptionsfilters, weil restliche Schadstoffe vom Biofilter zurückgehalten werden.

Zusätzlich kann ein Gaswäscher hinter das Adsorptionsfilter geschaltet werden, wodurch weitere Schadstoffe absorbiert werden, und eine Gasbefeuchtung vor dem Biofilter sichergestellt wird.

Staub und gasförmige Schadstoffe oder Reaktionsprodukte aus verschiedenen Schadstoffen (Verharzungen), welche durch Wärme nicht desorbierbar sind, stören den Betrieb des Adsorptionsfilters. Es ist bei einem Abgas, welches solche Substanzen enthält, von Vorteil, daß das Abgas vor Eintritt in das Adsorptionsfilter eine Feststoffschicht durchströmt. Diese Feststoffschicht sollte in Gasströmungsrichtung mehr als 20 cm tief sein, vorzugsweise mehr als 50 cm. Um verharzende Substanzen besonders wirksam zurückzuhalten, sollte die vorgeschaltete Feststoffschicht eine Oberfläche größer als 300 m²/m³ aufweisen.

Zur biologischen Oxidation der in der vorgeschalteten Feststoffschicht ausfiltrierten Schadstoffe kann die Feststoffschicht als Biofilter betrieben werden.

Eine weitere Verbesserung des Schutzes des Adsorptionsfilters vor der Verschmulzung mit nicht desorbierbaren Substanzen ergibt das zusätzliche Vorschalten eines Gaswäschers.

In die Kreislaufflüssigkeit dieses Gaswäschers können Chemikalien dosiert werden, um chemosorbierbare Schadstoffe auszuwaschen. Dieser vorgeschaltete Wäscher kann aber auch zur Abgabe von Schadstoffen an das Gas herangezogen werden, z.B. von Schadstoffen, die bei der Desorption des Adsorptionsfilters in flüssiger Form anfallen. Zu diesem Zweck wird in Perioden, in denen kein Abgas gereinigt werden muss, der Gasaustritt des Filtersystems mit dem Gaseintritt verbunden und ein Luftkreislauf aufrechterhalten, welcher im Gaswäscher Schadstoffe aufnimmt und in das Biofilter befördert. Bei diesem Gaskreislaufbetrieb können pro m³ Biofiltervolumen pro Stunde mehr als 200 g gasförmige Schadstoffe durch die Biofiltermasse strömen.

Anstelle einer Abgabe von Schadstoffen an das Gas mittels des Gaswäschers kann aber auch eine direkte Abgabe durch Erwärmen der Filterschicht des Adsorptionsfilters vorgenommen werden. Die hohe Schadstoffkonzentration im Kreislaufgas fördert im Sinne des HENRY' schen Gesetzes den Stofftransport aus der Gasphase in die feuchte Schicht des Biofilters.

Es ist auch möglich, flüssige Schadstoffe direkt in das Biofilter zu sprühen.

Anstelle einer direkten Erwärmung eines Desorptionsgasstromes oder als Ergänzung dieser Art der Wärmezufuhr können in der Adsorptionsmittelschicht Heizschlangen oder Heizkörper eingebaut werden, die mittels elektrischer Energie oder mittels eines flüssigen Wärmeträgers einen raschen Transport von Wärme in das Adsorptionsmittel ermöglichen.

Als Adsorptionsmittel können unter anderen erfindungsmäss verwendet werden: Aktivkohle, Molekularsiebe, Kieselgel, Kieselgur, Gasbeton, Bentonit oder ein Gemisch solcher Substanzen.

Die zu reinigenden Abgase können organische oder anorganische Schadstoffe oder Mischungen dieser Stoffe enthalten. Als organische Schadstoffe werden z.B. genannt: Kohlenwasserstoffe oder halogenierte Kohlenwasserstoffe, wie Alkane, Carbonsäuren, Aldehyde, Ketone, Aromaten, Ester, Terpentine, Glycole, Carbonsäureester, Alkohole oder Gemische solcher Stoffe.

Vorzugsweise sollte das Volumen der Biofiltermasse 20 bis 200mal größer sein als das Volumen des Adsorptionsmittels im Adsorptionsfilter.

Heißes Abgas kann in einem Gaswäscher gekühlt und vorgereinigt werden, um danach ein Biofilter, ein Adsorptionsfilter, einen Gaswäscher und ein zweites Biofilter zu durchströmen.

Vorzugsweise kann die Filtermasse des Biofilters folgende Substanzen enthalten: Torf, Kompost, Polystyrol-Hartschaum, Aktivkohle, Gasbeton, Reisig, Heidekraut, Klärschlamm oder ein Gemisch einzelner dieser Substanzen.

Die erläuterte Erfindung kann für ein breites Spektrum verschieden zusammgesetzter Abgase verwendet werden, um Schadstoffe, die als Gas, Aerosol oder Staub vorliegen, zu entsorgen.

Eine erfindungsgemäße Vorrichtung zur Durchführung des Verfahrens mit einem Biofilter und einem Adsorptionsfilter ist dadurch gekennzeichnet, daß das Biofilter feuchte Feststoffschichten aufweist und daß das Adsorptionsfilter Vorrichtungen aufweist, die ein periodisches Erwärmen auf Temperaturen über 45° C ermöglichen.

### Beispiel

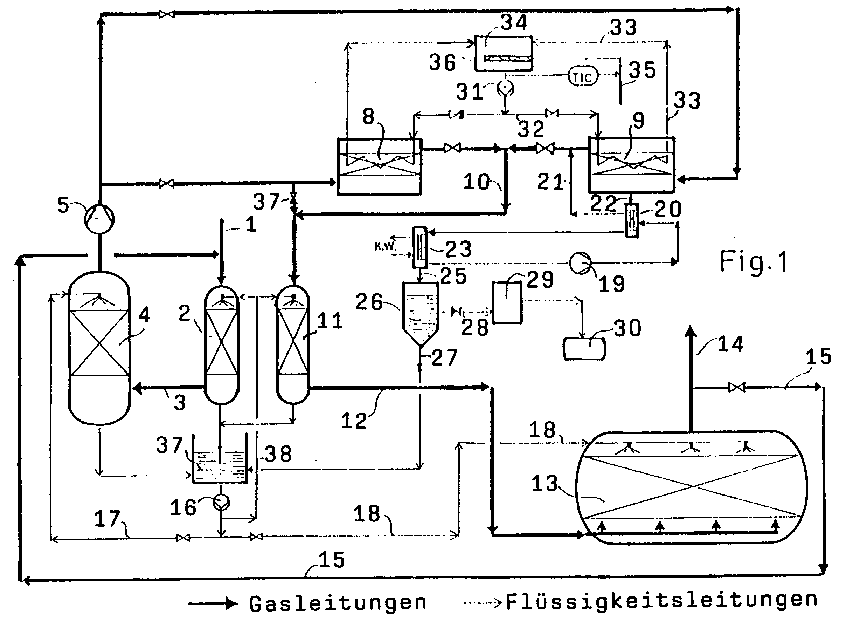

Die Figur 1 zeigt das Prozess-Schema einer erfindungsgemässen Pilotanlage. Gereinigt werden muss der mit (1) bezeichnete Abluftstrom folgender Spezifikation:
- Abluftmenge: 50 Nm³/h
- Temperatur: 15 - 15 °C
- Relative Feuchtigkeit: 40 - 60 %

In wechselnden Konzentrationen werden pro Arbeitstag von 10 Stunden folgende Schadstoffmengen im Abluftstrom mitgeführt:
- Staub und Aerosole: ca. 80 g/Arbeitstag
- Aceton: ca. 100 g/Arbeitstag
- Benzin: ca. 220 g/Arbeitstag
- Perchlorä: thylen ca. 30 g/Arbeitstag
- Toluol: ca. 300 g/Arbeitstag
- Methanol: ca. 100 g/Arbeitstag
- Terpentin: ca. 60 g/Arbeitstag
- n-Butanol: ca. 80 g/Arbeitstag
- Methylisobutylketon: ca. 30 g/Arbeitstag
- Salzsäure HCl: ca. 200 g/Arbeitstag.

Die Gasreinigungsanlage enthalt zwei Gaswäscher (2) und (11), zwei Adsorptionsfilter (8) und (9) und zwei Biofilter (4) und (13).

Der mit (1) bezeichnete Abgasstrom wird im Gaswäscher (2) in intensiven Kontakt gebracht mit Gaswaschflüssigkeit aus Leitung (38). Die über Behälter (37) und Pumpe (16) zirkulierende Kreislaufflüssigkeit absorbiert HCl und Staub. Eine nicht dargestellte pH-Regelung hält die Flüssigkeit in Behälter (37) mittels Natronlauge bei pH 6 - 7. Nicht dargestellt ist auch ein Frischwasserzusatz, welcher nach dem Flüssigkeitsniveau im Behälter (37) gesteuert wird. Durch die biologische Oxidation in den Biofiltern entsteht Wärme, wodurch Wasser verdampft. Um die Biofilter (4) und (13) genügend feucht zu halten, muss über Leitungen (17) und (18) Wasser auf die Oberfläche der Filtermasse versprüht werden.

Der im Wäscher (2) vorgereinigte Gasstrom gelangt über Leitung (3) in das Biofilter (4). Das Volumen der Filterschicht beträgt 250 Liter, ihre Höhe 1,3 m. Als Filterschicht dient ein Gemisch folgender Substanzen:
- Gasbeton Korngrösse 5 - 18 mm: 5 Volumenanteile
- Fasertorf: 2 Volumenanteile
- Kompost: 2 Volumenanteile
- Belebtschlamm aus Kläranlage: 1 Volumenanteil.

Die Filterschicht wird im Abstand von 5 Stunden wenige Minuten mit Flüssigkeit aus Leitung (17) besprüht bis aus der Schicht Flüssigkeit nach unten abtropft.

Der Gasstrom nach Biofilter (4) wird vom Ventilator (5) abgesaugt. Der Differenzdruck zwischen Ventilator-Eintritt und -Austritt beträgt 30 mbar. Im Ventilator erwärmt sich der Gasstrom, sodass die relative Gasfeuchte unter 90 % absinkt. Die Adsorptionswärme im Adsorptionsfilter (9) ergibt einen zusätzlichen Abfall der relativen Gasfeuchte. Als Adsorbens dienen 4 Liter eines Gemisches aus einem Volumenanteil Aktivkohle und zwei Volumenanteilen eines zeolithischen Molekularsiebes bestehend aus SiO₂.Al₂O₃. Fe₂O₃.MgO.

In der 150 mm tiefen Adsorptionsmittelschicht befinden sich Rohrschlanger, die mit Thermoöl beaufschlagt werden können.

Nach dem Adsorptionsfilter (9) gelangt der Gasstrom über Leitung (10) in den Gaswäscher (11) und über Leitung (12) in das Biofilter (13). Das Volumen der Biofiltermasse in diesem Biofilter beträgt 350 Liter.

Die gereinigten Abgase gelangen über Leitung (14) in die Atmosphäre. Ein automatisches Analysengerät bestimmt den Gehalt an organische gebundenem Gesamtkohlenstoff (in Fig. 1 nicht dargestellt).

Sobald die Konzentration über 8 mg C/Nm³ ansteigt, schaltet die Prozess-Steuerung den Gasweg um, und anstelle von Adsorptionsfilter (9) wird Adsorptionsfilter (8) durchströmt. Das Adsorptionsfilter (8) ist gleichartig mit Zuleitungen und Ableitungen für den Desorptionsvorgang ausgestattet wie Adsorptionsfilter (9), jedoch wurde auf eine Darstellung dieser Leitungen für Adsorptionsfilter (8) verzichtet.

Zur Desorption (Regenerierung) des beladenen Adsorptionsfilters (9) setzt die Prozess-Steuerung folgende Massnahmen in Gang: Im Wärmespeicher (34) befindet sich Thermoöl. Dieses Thermoöl wird durch Heizkörper (36) auf 150 °C gehalten. Die elektrische Leitung (35) versorgt Heizkörper (36).

Die Pumpe (31) fördert über Leitung (32) heisses Oel in die Heizschlangen der Adsorptionsmittelschicht im Adsorptionsfilter (9). Das Thermoöl gelangt über Leitung (33) zurück in den Wärmespeicher (34).

Nach ca. 30 Minuten wird Ventilator (19) eingeschaltet und damit folgender Gaskreislauf in Gang gesetzt:
2 Nm³/h Gas strömen zwischen den Rohren des Wärmetauschers (20) über Leitung (21) in das Adsorptionsfilter (9) und von oben nach unten durch die erhitzte Adsorptionsmittelschicht. Gas und desorbierte Lösungsmittel gelangen über Leitung (22) durch die Rohre des Wärmeaustauschers (20) und danach in den Gaskühler (23). Mittels Kühlwasser (K.W.) wird das Gas unter 25 °C gekühlt, wobei kondensierte Lösungsmittel und kondensiertes Wasser über Leitung (25) in das Dekantiergefäss (26) gelangen. Das aus Gaskühler (23) austretende Gas gelangt zurück zum Ventilator (19).

Im Dekantiergefäss (26) bilden sich zwei Flüssigkeitsschichten. Die obere Schicht besteht aus Lösungsmitteln, welche über Leitung (28) in die Destillation (29) geleitet werden. Die durch Rektifikation getrennten Lösungsmittel gelangen in Behälter (30). Das Lösungsmitteigemisch aus Leitung (28) kann aber auch direkt in der Anlage, aus welcher die zu reinigende Abluft stammt, wiederverwertet werden.

Zur Entsorgung der unteren, wässrigen Phase im Dekantiergefäss (26) wird wie folgt verfahren:
Das wässrige Kondensat, welches mit wasserlöslichen Lösungsmittelanteilen beladen ist, wird einem biologischen Abbau unterworfen. Während der Nacht (in einer Periode, in der keine Abluft anfällt) wird das System gemäss Fig. 1 im Gaskreislauf betrieben. Hiezu wird Leitung (15) geöffnet, wodurch aus Leitung (14) das Gas zurück zum Gaseintritt (1) geleitet wird. Ausserdem wird die Bypass-Leitung (37) geöffnet, sodass die Adsorptionsfilter (8) und (9) nicht durchströmt werden.

Die wässrige Schicht aus Dekanter (26) wird über Leitung (27) in Behälter (37) geleitet. Die Flüssigkeit aus Behälter (37) gelangt in die Gaswäscher (2) und (11). Der Gasstrom strippt die Lösungsmittel aus der Kreislaufflüssigkeit. Die Lösungsmitteldämpfe werden solange im System umgewälzt, bis sie von den Biofiltern aufgenommen worden sind und die Lösungsmittelkonzentration im Kreislaufgas unter 8 g C/Nm³ abgefallen ist. Der Zeitbedarf für die biologische Oxidation der pro Arbeitstag ins wässrige Kondensat gelangten Lösungsmittel liegt unter 8 Stunden.

Die mittlere Abscheideleistung für Lösungsmitteldämpfe beträgt über 99,6 % (C im Reingas < 6 mg/Nm³).
Die mittlere Abscheideleistung für HCl beträgt 99,8 % (HCl im Reingas < 1 mg/Nm³).

Von den im Rohgas enthaltenen Lösungsmitteln werden 40 % biologisch oxidiert, 60 % werden zurückgewonnen.

### Bemerkungen zum Synergie-Effekt

Die im Beispiel beschriebene Art Adsorber, Biofilter und Wäscher zu kombinieren, ermöglicht ein Filtersystem zur Abgasreinigung für ein breites Spektrum von Schadstoffen.

Wollte man gleichwertige Abscheidegrade auf Basis von nur einem der drei genannten Abscheidemechanismen sicherstellen, wäre ein Filter mit höheren Investitions- und Betriebskosten erforderlich.

Für die Adsorptionsfilter ergeben sich - dank der Wäscher und Biofilter - folgende Vorteile:
- die intensive Gaswäsche beseitigt Stäube und wasserlösliche oder chemosorbierbare Schadstoffe,
- die über 1 m tiefe feinkörnige Schicht im Biofilter hält verharzende Substanzen zurück, wodurch ein Beladen des Adsorptionsmittels mit nicht desorbierbaren Substanzen vermieden wird,
- der nachgeschaltete Wäscher und das zweite Biofilter erfassen Schadstoffreste nach dem Adsorber, wodurch derselbe höher belastet werden kann: dies erlaubt lange Standzeiten zwischen den erforderlichen Regenerationsphasen.

In die Kreislaufflüssigkeit der Gaswäscher können Chemikalien zugesetzt werden (z.B. NaOH zur Neutralisation von Säuren, die aus dem Gas ausgewaschen werden müssen).

Auch die Wäscher können relativ klein gehalten werden, weil Reste von auswaschbaren Schadgasen in der voluminösen, feuchten Masse der Biofilter absorbiert werden.

Für die Biofilter resultieren aus der Kombination mehrerer Gasreinigungsmechanismen spezielle Vorteile:
- dank der Adsorber und Wäscher kann die maximal mögliche Abbauleistung der Mikroorganismen kontinuierlich ausgenutzt werden. Wenn z.B. verschmutzte Abluft nur während des Arbeitstages anfällt, können die Biofilter auch nachts Schadstoffe abbauen, indem Schadstoffe, die in den Adsorbern oder Wäschern zurückgehalten wurden, kontinuierlich den Biofiltern zugeführt werden. In Perioden, in denen keine zu reinigende Abluft anfällt (z.B. nachts) kann Luft im Filtersystem im Kreislauf geführt werden; dabei ist es möglich, die Adsorber langsam zu regenerieren (durch mildes Erwärmen). Die Schadstoffkonzentration der Kreislaufgase kann hoch gehalten werden, wobei nach dem HENRY' schen Gesetz entsprechend mehr Schadstoffe in der feuchten Masse der Biofilter aufgenommen werden. Die zwecks Desorption zugeführte Wärme fördert den biologischen Abbau.
- Bei wechselhafter Zusammensetzung der Schadstoffe in den Abluftströmen setzt der biologische Abbau gelegentlich - aus manchmal unerklärbaren Gründen - zeitweise aus; in solchen Perioden wird die Abluft aber dennoch gereinigt. Die Adsorber müssen dann entsprechend häufiger regeneriert werden.
- Auf biologischem Wege schlecht oder gar nicht abbaubare Schadstoffe (z.B. Fluor-Chlor-kohlenwasserstoffe) werden in den Adsorbern abgeschieden und können aus dem kondensierten Desorbat zurückgewonnen werden.

Im Filtersystem findet durch den biologischen Abbau und die zugeführte Desorptionswärme eine Erwärmung der gereinigten Abgase statt, wodurch Wasser verdampft. Zur Befeuchtung der Biofilter wird Kreislaufflüssigkeit aus den Wäschern verwendet. Durch Zusatz von Frischwasser in die Wäscher-Kreisläufe wird die Gaswaschflüssigkeit kontinuierlich erneuert.

Abgesehen von durch biologischen Abbau gebildetem CO₂ und H₂O gelangen alle Umsetzungsprodukte der Schadstoffe in die Feststoffschicht der Biofilter. Eine Erneuerung dieser Schicht ist nur im Abstand von Jahren erfoderlich. Verbrauchte Biofiltermasse kann als Kompost abgegeben werden.

Das System ist ausserordentlich anpassungsfähig an die speziellen Randbedingungen von Abluft- und Abgasreinigungsproblemen.

## Patentansprüche

1. Verfahren zur Reinigung von mit Schadstoffen belastetem Abgas
wobei ein Teil oder die Gesamtmenge der abgeschiedenen Schadstoffe durch biologische Oxidation entsorgt wird, und sowohl ein Biofilter als auch ein Adsorptionsfilter verwendet werden, dadurch gekennzeichnet. dass
- im Biofilter mit feuchten Feststoffschichten und Temperaturen unter 45 °C gearbeitet wird,
- in mindestens einem vor oder nach dem Biofilter vom Abgas durchströmten Adsorptionsfilter bei einer relativen Gasfeuchte unter 90 % Schadgase adsorbiert werden, und das Adsorptionsfilter durch periodisches Erwärmen auf Temperaturen über 45 °C weitgehend frei von Mikroorganismen gehalten wird.
- mindestens ein Teil der beim Erwärmen desorbierten Schadstoffe einem biologischen Abbau im Biofilter unterworfen wird,
- in Perioden, in denen kein Abgas gereinigt werden muss, der Gasaustritt des Filtersystems mit dem Gaseintritt verbunden wird und ein Luftkreislauf aufrechterhalten wird.

2. Verfahren gemäss Anspruch 1
dadurch gekennzeichnet, dass
das Abgas nach dem Adsorptionsfilter zumindest durch ein Biofilter geleitet wird.

3. Verfahren gemäss Anspruch 1
dadurch gekennzeichnet, dass
das Abgas nach dem Adsorptionsfilter durch einen Gaswäscher und ein Biofilter geleitet wird.

4. Verfahren nach einem der Ansprüche 1 - 3
dadurch gekennzeichnet, dass
das Abgas vor Eintritt in das Adsorptionsfilter eine Feststoffschicht durchströmt.

5. Verfahren nach Anspruch 4
dadurch gekennzeichnet, dass
die Feststoffschicht in Gasstromungsrichtung mehr als 20 cm tief ist.

6. Verfahren nach Anspruch 4
dadurch gekennzeichnet, dass
die Feststoffschicht mehr als 50 cm tief ist.

7. Verfahren nach Anspruch 4
dadurch gekennzeichnet, dass
die Feststoffschicht eine Oberfläche grösser als 300 m²/m³ aufweist.

8. Verfahren nach einem der Ansprüche 4 - 7
dadurch gekennzeichnet, dass
die Feststoffschicht als Biofilter betrieben wird.

9. Verfahren nach einem der Ansprüche 1 - 8
dadurch gekennzeichnet, dass
das Abgas vor der ersten Feststoffschicht einen Gaswäscher durchströmt.

10. Verfahren nach Anspruch 9
dadurch gekennzeichnet, dass
der Kreislaufflüssigkeit des Gaswäschers Chemikalien zugesetzt werden.

11. Verfahren nach Anspruch 8
dadurch gekennzeichnet, dass
der Gaswäscher zeitweise Schadstoffe an das Abgas abgibt.

12. Verfahren nach Anspruch 1, dadurch gekennzeichnet, daß durch Desorption der Adsorptionsfilter und/oder durch Zugabe von flüssigen Schadstoffen in einen Gaswäscher oder in ein Biofilter pro m³ Biofiltervolumen pro Stunde mehr als 200 g gasförmige Schadstoffe geleitet werden.

13. Verfahren nach einem der Ansprüche 1 - 12, dadurch gekennzeichnet, daß in der Adsorptionsmittelschicht mittels elektrischer Energie oder mittels eines flüssigen Wärmeträgers durch Heizschlangen oder Heizkörper ein rascher Transport von Wärme in das Adsorptionsmittel erfolgt.

14. Verfahren nach einem der Ansprüche 1 - 13, dadurch gekennzeichnet, daß als Adsorptionsmittel Aktivkohle, Molekularsiebe, Kieselgel, Kieselgur, Gasbeton, Bentonit oder ein Gemisch solcher Substanzen verwendet werden.

15. Verfahren nach einem der Ansprüche 1 - 14, dadurch gekennzeichnet, daß die Abgase organische oder anorganische Schadstoffe oder Mischungen dieser Stoffe enthalten.

16. Verfahren nach Anspruch 15, dadurch gekennzeichnet, daß es sich bei den organischen Schadstoffen um Kohlenwasserstoffe oder halogenierte Kohlenwasserstoffe, wie Alkane, Carbonsäuren, Aldehyde, Ketone, Aromaten, Ester, Terpentine, Glycole, Carbonsäureester, Alkohole oder um Gemische handelt.

17. Verfahren nach Anspruch 1, dadurch gekennzeichnet, daß das Abgas in einem Gaswäscher gekühlt und vorgereinigt wird und danach ein Biofilter, ein Adsorptionsfilter, einen Gaswäscher und ein zweites Biofilter durchströmt.

18. Vorrichtung zur Durchführung des Verfahrens nach Anspruch 1, mit einem Biofilter und einem Adsorptionsfilter, dadurch gekennzeichnet, daß das Biofilter feuchte Feststoffschichten aufweist, und daß das Adsorptionsfilter Vorrichtungen aufweist, die ein periodisches Erwärmen auf Temperaturen Über 45 C ermöglichen.

19. Vorrichtung nach Anspruch 18, dadurch gekennzeichnet, daß das Volumen der Biofiltermasse 20 bis 200 mal größer ist als das Volumen des Adsorptionsmittels im Adsorptionsfilter.

20. Vorrichtung gemäß Anspruch 18 oder 19, dadurch gekennzeichnet, daß zusätzlich mindestens ein Gaswäscher installiert ist.

21. Vorrichtung gemäß Anspruch 18 oder 19, gekennzeichnet durch ein Biofilter mit einer Filterschicht aus Torf, Kompost, Polystyrol-Hartschaum, Aktivkohle, Gasbeton, Reisig, Heidekraut, Klärschlamm oder ein Gemisch einzelner dieser Substanzen.

22. Verwendung der Vorrichtung gemäß einem der Ansprüche 18 - 21 zur Abluft- oder Abgasreinigung und/oder zur Entsorgung von Schadstoffen, die in Form von Gasen oder Aerosolen in Gasströmen enthalten waren.

## Claims

1. Process for the purification of waste gas polluted with harmful substances in which part or all of the separated harmful substances are removed by biological oxidation and characterised in that
- in the biofilter moist solid layers and temperatures below 45° arc worked with,
- in at least one adsorption filter through which the waste gas flows before or after the biofilter, harmful gases are adsorbed at a relative gas humidity below 90 %, and the adsorption filter is kept to a large extent free from microorganisms by periodic heating up to temperatures above 45°C,
- at least part of the harmful substances desorbed during the heating-up are subjected to biological decomposition in the biofilter,
- in periods when no waste gas has to be purified, the gas outlet of the filter system is connected to the gas inlet and an air circulation is maintained.

2. Process according to Claim 1. characterised in that, after the adsorption filter, the waste gas is conveyed at least through a biofilter.

3. Process according to Claim 1. characterised in that, after the adsorption filter, the waste gas is conveyed through a gas scrubber and a biofilter.

4. Process according to one of Claims 1-3. characterised in that, before entry into the adsorption filter, the waste gas flows through a solid layer.

5. Process according to Claim 4. characterised in that the solid layer is more than 20 cm deep in the direction of the gas flow.

6. Process according to Claim 4. characterised in that the solid layer is more than 50 cm deep.

7. Process according to Claim 4. characterised in that the solid layer has a surface area greater than 300 m²/m³.

8. Process according to one of Claims 4-7. characterised in that the solid layer is operated as a biofilter.

9. Process according to one of Claims 1-8. characterised in that before the first solid layer, the waste gas flows through a gas scrubber.

10. Process according to Claim 9,characterised in that chemicals are added to the circulation liquid of the gas scrubber.

11. Process according to Claim 8, characterised in that the gas scrubber from time to time releases harmful substances to the waste gas.

12. Process according to Claim 1, characterised in that, because of desorption of the adsorption filters and/or the addition of liquid harmful substances, per m³ volume of biofilter, more than 200 g gascous harmful substances per hour are conveyed into a gas scrubber or into a biofilter.

13. Process according to one of Claims 1-12. characterised in that a rapid transport of heat into the adsorption medium takes place in the layer of adsorption medium by means of electrical energy or by means of a liquid heat carrier through heat coils or heaters.

14. Process according to one of Claims 1-13. characterised in that activated carbon, molecular sieves, silica gel, kieselguhr, gas concrete, bentonite or a mixture of such substances are used as adsorption medium.

15. Process according to one of Claims 1-14. characterised in that the waste gases contain organic or inorganic harmful substances or mixtures of these substances.

16. Process according to Claim 15, characterised in that the organic harmful substances involve hydrocarbons or halogenated hydrocarbons like alkanes, carboxylic acids, aldehydes, ketones, aromatic substances, esters, turpentines, glycols, carboxylic acid esters, alcohols or mixtures.

17. Process according to Claim 1, characterised in that the waste gas is cooled and prepurified in a gas scrubber and thereafter flows through a biofilter, an adsorption filter, a gas scrubber and a second biofilter.

18. Device for carrying out the process according to Claim 1, with a biofilter and an adsorption filter, characterised in that the biofilter has moist solid layers and that the adsorption filter has devices which make possible periodic heating up to temperatures above 45°C.

19. Device according to Claim 18. characterised in that the volume of the biofilter material is 20 to 200 times greater than the volume of the adsorption medium in the adsorption filter.

20. Device according to Claim 18 or 19. characterised in that, additionally, at least one gas scrubber is installed.

21. Device according to Claim 18 or 19. characterised by a biofilter with a filter layer made from peat, compost, hard polystyrene foam, activated carbon, gas concrete, brushwood, heather, sewage sludge or a mixture of some of these substances.

22. Use of the device in accordance with one of Claims 18-21 for the purification of waste air or waste gas and/or for the disposal of harmful substances which are contained in gas streams in the form of gases or acrosols.

## Revendications

1. Procédé d'épuration de gaz brûlé charge de substances nocives dans lequal une partie ou la totalité des substances nocives séparées est éliminée par oxydation biologique et dans lequel on utilise un filtre biologique ainsi qu'un filtre d'adsorption, caractérisé en ce que:
- on opère dans le filtre biologique avec des couches de matières solides humides et à des températures inférieures à 45°C,
- on adsorbe les gaz nocifs dans au moins un filtre d'adsorption traversé par le gaz brûlé avant ou après le filtre biologique à une humidité relative du gaz inférieure à 90 % et on maintient le filtre d'adsorption largement exempt de micro-organismes par chauffage largement exempt de microorganismes par chauffage périodique à des températures supérieures à 45°C, et
- on soumet au moins une partie des substances nuisibles désorbées au cours du chauffage à une décomposition biologique dans le filtre biologique.
- au cours des périodes où l'on ne doit pas épurer de gaz brûlé, la sortie de gaz du système de filtration est connectée à l'entrée de gaz et l'on maintient un circuit d'air.

2. Procédé selon la revendication 1, caractérisés en ce que le gaz brûlé est acheminé après le filtre d'adsorption au moins à travers un filtre biologique.

3. Procédé selon la revendication 1, caractérisé en ce que le gaz brûlé est acheminé après le filtre d'adsorption à travers un épurateur de gaz et un filtre biologique.

4. Procédé selon l'une quelconque des revendications 1 à 3, caractérisé en ce que le gaz brûlé traverse une couche de matières solides avant de pénétrer dans le filtre d'adsorption.

5. Procédée selon la revendication 4, caractérisé en ce que la couche de matières solides a une profondeur de plus de 20 cm dans la direction d'écoulement du gaz.

6. Procédé selon la revendication 4, caractérisé en ce que la couche de matières solides a une profondeur de plus de 50 cm.

7. Procédé selon la revendication 4, caractérisé en ce que la couche de matières solides a une surface supérieure à 300 m²/m³.

8. Procédé selon l'une quelconque des revendication 4 à 7, caractérisé en ce que la couche de matières solides est utilisée en tant que filtre biologique.

9. Procédé selon l'une quelconque des revendication 1 à 8, caractérisée en ce que le gaz brûlé traverse un épurateur de gaz avant la première couche de matières solides.

10. Procédé selon la revendication 9, caractérisé en ce que des produits chimiques sont ajoutés au liquide en circulation de l'épurateur de gaz.

11. Procédé selon la revendication 8, caractérisé en ce que l'épurateur de gaz délivre par intervalles des substances nocives au gaz brûlé.

12. Procédé selon la revendication 1, caractérisé en ce que, par désorption du filtre d'adsorption e/ou par addition de substances nocives liquides, on achemine dans un épurateur de gaz ou un filtre biologique plus de 200 g de substances nocives gazeuses par m³ de volume du filtre biologique.

13. Procédé selon l'une quelconque des revendications 1 à 12, caractérisé en ce que l'on obtient un transport plus rapide de la chaleur dans le milieu d'adsorption de la couche de milieu d'adsorption via une énergie électrique ou via un liquide caloporteur à l'aide de serpentins de chauffage ou de corps de chauffage.

14. Procédé selon l'une quelconque des revendications 1 à 13, caractérisé en ce que l'on utilise comme milieu d'adsorption du charbon activé, des tamis moléculaires, du gel de silice, du kieselguhr, du béton cellulaire, de la bentonite ou un mélange de ces substances.

15. Procédé selon l'une quelconque des revendications 1 à 14, caractérisé en ce que les gaz brûlés contiennent des substances nocives organiques ou minérales ou des mélanges de ces substances.

16. Procédé selon la revendication 15, caractérisé en ce que les substances nocives organiques sont des hydrocarbures ou des hydrocarbures halogénés tels que des alcanes, des acides carboxyliques, des aldéhydes, des cétones, aromatiques, des esters, de la térébenthine, des glycols, des esters d'acides carboxyliques, des alcools ou leurs mélanges.

17. Procédé selon la revendication 1, caractérisé en ce que le gaz brûlé est refroidi et pré-épuré dans un épurateur de gaz, et traverse ensuite un filtre biologique, un filtre d'adsorption, un épurateur de gaz et un deuxième filtre biologique.

18. Dispositif permettant de réaliser le procédé de la revendication 1, comprenant un filtre biologique et un filtre d'adsorption, caractérisé en ce que le filtre biologique comporte des couches de matières solides humides et en ce que le filtre d'adsorption comporte des dispositifs qui permettent un chauffage périodique à des températures supérieures à 45°C.

19. Dispositif selon la revendication 18, caractérisé en ce que le volume de la masse du filtre biologique est 20 à 200 fois plus grand que le volume du milieu d'adsorption dans le filtre d'adsorption.

20. Dispositif selon la revendication 18 ou 19, caractérisé en ce qu'au moins un épurateur de gaz est installé en outre.

21. Dispositif selon la revendication 18 ou 19, caractérisé par un filtre biologique comportant une couche filtrante constituée de tourbe, de compost, de mousse rigide de polystyrène, de charbon activé, de béton cellulaire, de fagots de bois, de bruyère, de boues de curage ou d'un mélange de quelques unes de ces substances.

22. Utilisation du dispositif selon l'une quelconque des revendication 18 à 21 pur l'épuration d'air vicié ou de gaz brûlé pour en éliminer les substances nocives qui seraient présentes dans les flux de gaz sous la forme de gaz ou d'aérosols.
